(19) **Europäisches Patentamt / European Patent Office / Office européen des brevets**

(11) **EP 4 101 906 B1**

(12) **EUROPEAN PATENT SPECIFICATION**

(45) Date of publication and mention
of the grant of the patent:
**26.02.2025 Bulletin 2025/09**

(21) Application number: **21177906.1**

(22) Date of filing: **07.06.2021**

(51) International Patent Classification (IPC):
***C09J 133/08*** (2006.01)     ***C09J 7/38*** (2018.01)
***C09J 143/04*** (2006.01)     ***C09J 7/26*** (2018.01)

(52) Cooperative Patent Classification (CPC):
(C-Sets available)
**C09J 143/04; C09J 7/26; C09J 7/385;**
**C09J 133/08;** C08F 220/1808; C09J 2203/346;
C09J 2203/354; C09J 2301/124; C09J 2400/243;
C09J 2433/00                                    (Cont.)

(54) **PRESSURE-SENSITIVE ADHESIVE COMPOSITION FOR ADHESION TO FOAMED SURFACES AND RELATED TAPES AND LAMINATES**

DRUCKEMPFINDLICHE KLEBSTOFFZUSAMMENSETZUNG ZUM KLEBEN AN GESCHÄUMTEN OBERFLÄCHEN UND ENTSPRECHENADE BÄNDER UND LAMINATE

COMPOSITION ADHÉSIVE SENSIBLE À LA PRESSION POUR L'ADHÉRENCE À DES SURFACES EN MOUSSE ET RUBANS ET STRATIFIÉS ASSOCIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.12.2022 Bulletin 2022/50**

(73) Proprietor: **Nitto Belgium NV**
**3600 Genk (BE)**

(72) Inventors:
• **Sak, Iris**
**3600 Genk (BE)**
• **Hamada, Hiroyuki**
**3600 Genk (BE)**
• **Jasinski, Florent**
**3600 Genk (BE)**

• **Paesen, Bert**
**3600 Genk (BE)**

(74) Representative: **Grünecker Patent- und Rechtsanwälte**
**PartG mbB**
**Leopoldstraße 4**
**80802 München (DE)**

(56) References cited:
**EP-A1- 3 147 339     JP-A- 2015 101 544**
**JP-A- 2017 071 784     US-A1- 2013 323 498**

Remarks:
The file contains technical information submitted after the application was filed and not included in this specification

(52) Cooperative Patent Classification (CPC): (Cont.)

C-Sets
C08F 220/1808, C08F 220/14, C08F 220/06,
C08F 220/06, C08F 230/085

**Description**

**FIELD OF INVENTION**

The present invention relates to environmentally friendly pressure-sensitive adhesive (PSA) compositions with excellent foam adhesion performance. In addition, pressure-sensitive adhesive tapes comprising said adhesive composition and the use of said adhesive composition for application on foamed substrate surfaces are described.

Further aspects of the present invention include adhesive foam-based laminates, comprising a foam sheet and an adhesive layer comprising the aforementioned compositions, which may be used as insulation, shock absorption, cushioning and noise reduction material with excellent conformability and delamination resistance.

**BACKGROUND OF THE INVENTION**

Pressure-sensitive adhesive (PSA) compositions are extensively employed in the preparation of foam-based multilayer laminates, which may be used as insulation, shock absorption, cushioning and/or noise reduction materials in a wide variety of applications, such as in the transport sector (e.g., automotive or aircraft interior or exterior, etc.), in home domestic appliances (e.g., white goods) or buildings (e.g., sound absorption panels for walls or ceilings), for example. For instance, the PSA may be applied within a double-sided adhesive tape, which may be laminated on a foam sheet in order to provide a so-called "foam complex".

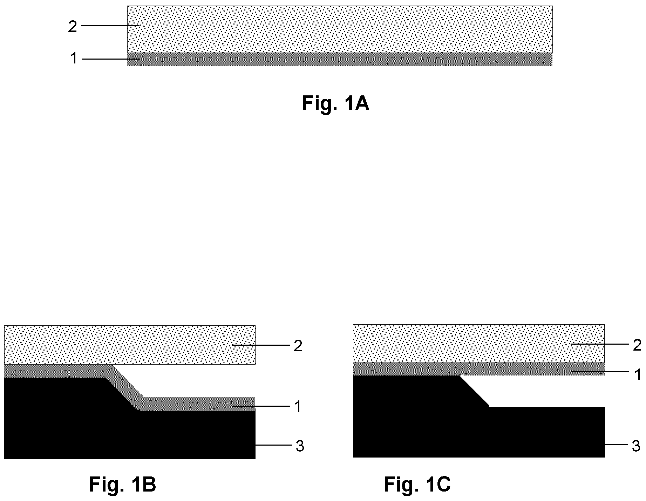

For a large number of applications, such as automotive body parts, for example, it is desirable that adhesive foam-based laminates exhibit a high conformability, i.e. a capacity to adapt and conform to complex 3D shapes and stay in place without additional support. As such it is necessary for the pressure-sensitive adhesive composition to enable high adhesion on both the foam-based material and the substrate surface onto which the laminate is applied to avoid anchorage failure (delamination of adhesive layer 1 from foam layer 1, as illustrated in Fig. 1B) or adhesive failure (delamination of adhesive layer 1 from substrate 3, as illustrated in Fig. 1C).

While achieving high adhesion on foamed surfaces is a challenge in itself due to the stress induced by foam deformation, providing a pressure-sensitive adhesive which enables favourable adhesion to a large number of different foamed materials with different surface free energies is even more challenging. Therefore it remains desirable to provide a pressure-sensitive adhesive which is capable of firm adhesion to a large variety of foamed materials, including, but not limited to thermosetting resins (e.g., thermosetting epoxy foams or aromatic copolyester-based foams), thermoplastic materials (e.g., foams based on PE, PP, PS, PVC or PMMA) and rubber-based foams (e.g., foams based on natural rubber, silicone rubber, EPDM rubber and styrene butadiene rubber). Moreover, it would be desirable for the adhesive to maintain a good debonding efficiency by maximizing stress dissipation during removal.

JP 2011-093956 A, for instance, discloses an acrylic PSA composition which advantageously combines good adhesion performance, removability and conformability to curved surfaces. However, when the PSA composition of JP 2011-093956 A is applied to foamed substrates, the delamination resistance and conformability tends to be insufficient.

In the recent years, efforts have been made to produce PSA adhesives which are more environmentally friendly and avoid extensive use of organic solvents, such as emulsion-type pressure-sensitive adhesives using water as a dispersion medium. However, water-dispersible acrylic adhesives require modification to achieve comparable adhesive strength, especially when being applied to foamed substrates. For example, JP 6 590 046 B2 discloses the addition of tackifiers to enhance adhesive strength for use on foamed substrates. However, the addition of tackifiers in emulsion and non-emulsion systems not only increases the amount of emissions (such as those of volatile organic compounds (VOC) and semi-volatile fogging compounds (FOG)) originating from the PSA compositions or tapes but also increases the selectivity of the adhesive towards specific foams, thus substantially limiting the range of application of the product. For example, publications JP 2015-101644 A, US 2013/323498 A1 and JP 2017-071784 A disclose that the omission of tackfying agents may cause a deterioration in light-press repulsion resistance and promote the tendency to a decrease in adhesive strength to different substrates. EP 3 147 339 A1 discloses adhesive compositions which combine improved peel strength to SUS, PP and urethane foam substrates. However, foam conformability and adhesion performance and bonding efficiency with different foam substrates have not been addressed in this publication.

Therefore, it remains desirable to provide an adhesive composition that further suppresses or entirely avoids VOC or FOG emissions, while displaying favourably high adhesion on different types of foams and high conformability both at ambient and at elevated temperatures, and which enables manufacturing of adhesive foam-based laminates which are simultaneously environmentally friendly and exhibit improved conformability, adhesion and debonding efficiency.

**SUMMARY OF THE INVENTION**

The present invention solves these problems with the subject matter of the claims as defined herein. Further advantages of the present invention will be further explained in detail in the section below.

According to a first aspect of the present invention, acrylic pressure-sensitive adhesive composition, comprising an acrylic polymer comprising, as monomer components: a) an alkyl (meth)acrylate having an alkyl group with 2 to 14 carbon atoms; b) at least one $\alpha,\beta$-ethylenically unsaturated carboxylic acid monomer or $\alpha,\beta$-ethylenically unsaturated carboxylic acid ester monomer other than component a); and c) an alkoxysilyl group-containing monomer; wherein the acrylic polymer has a weight-average molecular weight ($M_w$) of less than 1000 kDa; wherein the acrylic pressure-sensitive adhesive composition contains a tackifier in an amount of 0.2 wt.-% or less, based on the total weight of the acrylic polymer; and wherein the polydispersity index (PDI) of the acrylic polymer, defined as the ratio of the weight-average molecular weight ($M_w$) to the number-average molecular weight ($M_n$) of the acrylic polymer, is between 1.5 and 4.5, the weight-average molecular weight ($M_w$) and the number-average molecular weight ($M_n$) being measured by gel permeation chromatography (GPC).

A second aspect of the present invention relates to the use of the aforementioned acrylic pressure-sensitive adhesive composition for application on foamed substrate surfaces.

In a third aspect, the present invention relates to a pressure-sensitive adhesive tape comprising an adhesive layer on at least one surface of a carrier layer and an optional release liner provided on the adhesive layer, wherein the adhesive layer comprises the aforementioned acrylic pressure-sensitive adhesive composition.

In a fourth aspect, the present invention relates to an adhesive foam-based laminate, comprising a foam sheet and an adhesive layer comprising the aforementioned acrylic pressure-sensitive adhesive composition or the aforementioned pressure-sensitive adhesive tape on a surface of the foam sheet.

Preferred embodiments of the acrylic pressure-sensitive adhesive composition according to the present invention and other aspects of the present invention are described in the following description and the claims.

**BRIEF DESCRIPTION OF THE DRAWINGS**

FIG. 1A is a schematic representation of foam complex.
FIG. 1B illustrates an anchorage failure of a foamed complex.
FIG. 1C illustrates an adhesive failure of a foamed complex.
FIG. 2 schematically depicts an exemplary double-sided adhesive tape.
FIG. 3 shows the results of 90° peel adhesion measurements with different foam types.
FIG. 4 depicts the non-selectivity performance of the tested samples.

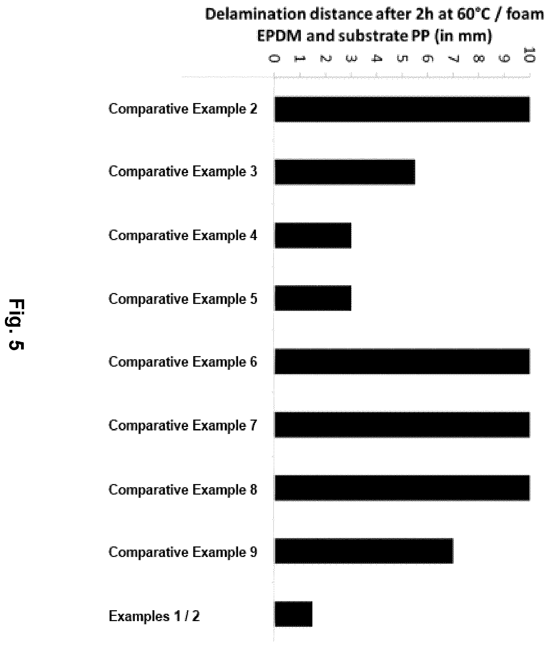

FIG. 5 shows the foam conformability of tested samples (2h at 60°C).
FIG. 6 shows the VOC/fogging data measured for tested samples.

**DETAILED DESCRIPTION OF THE INVENTION**

For a more complete understanding of the present invention, reference is now made to the following description of the illustrative embodiments thereof:

Pressure-Sensitive Adhesive Composition

In a first embodiment, the present invention relates to an acrylic pressure-sensitive adhesive composition, comprising an acrylic polymer comprising, as monomer components: a) an alkyl (meth)acrylate having an alkyl group with 2 to 14 carbon atoms; b) at least one $\alpha,\beta$-ethylenically unsaturated carboxylic acid monomer or $\alpha,\beta$-ethylenically unsaturated carboxylic acid ester monomer other than component a); and c) an alkoxysilyl group-containing monomer; wherein the acrylic polymer has a weight-average molecular weight ($M_w$) of less than 1000 kDa; wherein the acrylic pressure-sensitive adhesive composition contains a tackifier in an amount of 0.2 wt.-% or less; and wherein the polydispersity index (PDI) of the acrylic polymer, defined as the ratio of the weight-average molecular weight ($M_w$) to the number-average molecular weight ($M_n$) of the acrylic polymer, is between 1.5 and 4.5, the weight-average molecular weight ($M_w$) and the number-average molecular weight ($M_n$) being measured by gel permeation chromatography (GPC.

In order to achieve low emission of volatile organic compounds (VOC) and especially fogging (FOG), the acrylic pressure-sensitive adhesive composition according to the present invention preferably contains a tackifier in an amount of 0.15 wt.-% or less, such as 0.1 wt.-% or less, 0.05 wt.-% or less, or 0.01 wt.-% or less based on the total weight of the acrylic polymer. Most preferably, the acrylic pressure-sensitive adhesive composition does not contain a tackifier at all. Examples of tackifiers include rosin-based tackifier resins (e.g., gum rosin, wood rosin, tall oil rosin, stabilized rosin obtained by disproportionating or hydrogenating the rosin), and polymerized rosin), rosin derivative tackifier resins (e.g., esters of rosin-based resins, phenol-modified products of rosin-based resins), petroleum-based tackifier resins (e.g. aliphatic petroleum resins, aromatic petroleum resins, copolymer petroleum resins, alicyclic petroleum resins, and hydrides thereof), terpene-based tackifier resins (e.g., $\alpha$-pinene resin, $\beta$-pinene resin, aromatic-modified terpene resin, and terpene phenol resin), phenol-based tackifier resins, ketone-based tackifier resins (e.g., ketone-based resins obtained by condensing ketones (for example, aliphatic ketones such as methyl ethyl ketone, methyl isobutyl ketone, and acetophenone; alicyclic ketones such as cyclohexanone and methylcyclohexanone) and formaldehyde), and the like.

Tackifiers that are used to improve the adhesive performance on substrates or foams are oligomeric compounds with high degree of volatility as opposed to polymers. The inclusion of these additives within the adhesive formulation leads to an increase of VOC and FOG emissions. The present invention avoids these problems by minimizing or entirely omitting the use of tackifiers, and by suitably adjusting the properties and composition of the acrylic polymer.

It is also preferred that the content of plasticizer in the PSA composition is less than 5 wt.-% based on the total weight of the pressure-sensitive adhesive, more preferably less than 3 wt.-%, such as 1 wt.-% or less, 0.5 wt.-% or less, or 0.05 wt.-% or less. Especially preferably, the use of plasticizer in the acrylic PSA composition is entirely omitted. Plasticizers, as defined herein, may include hydrocarbon oil components (such as aliphatic/paraffinic components, aromatic components and naphthenic components, as well as mixtures thereof), adipic ester plasticizers, as well as plasticizers selected among propylene oligomers, butene oligomers, isoprene oligomers, hydrogenated isoprene oligomers, butadiene oligomers, benzoic esters and vegetable and animal oils and derivatives thereof, for example.

The acrylic PSA composition generally exhibits a VOC emission of less than 100 ppm, preferably less than 80 ppm and more preferably less than 60 ppm. Alternatively, or in combination, the acrylic PSA composition according to the present invention generally exhibits a FOG emission of less than 250 ppm, preferably less than 50 ppm, more preferably less than 10 ppm, such as 5 ppm or less or 1 ppm or less. Both VOC and FOG emission may be measured by a combination of thermodesorption und GC/MS methods according to VDA 278, for example.

Monomer component a) is an alkyl (meth)acrylate having an alkyl group with 2 to 14 carbon atoms, preferably with 2 to 12 carbon atoms and more preferably with 4 to 10 carbon atoms. Without being limited thereto, examples thereof include n-butyl (meth)acrylate, isobutyl (meth)acrylate, n-hexyl (meth)acrylate, 2-ethylhexyl (meth)acrylate, and 2-ethylhexyl (meth)acrylate, cyclohexyl (meth)acrylate, n-octyl (meth)acrylate, isooctyl (meth)acrylate, nonyl (meth)acrylate, isononyl (meth)acrylate, undecyl (meth)acrylate, isodecyl (meth)acrylate, undecyl (meth)acrylate, and the like. Further preferred examples include n-butyl (meth)acrylate and 2-ethylhexyl (meth)acrylate, of which 2-ethylhexyl (meth)acrylate is particularly preferred. Unless otherwise indicated, it will be understood that any term containing parentheses refers, alternatively, to the whole term as if no parentheses were present and the term without that contained in the parentheses, and combinations of each alternative. Thus, the term "(meth)acrylate" means acrylate, methacrylate, or mixtures thereof, and, similarly, the term "(meth)acrylic" generally refers to any of acrylic, methacrylic, and mixtures thereof.

The amount of monomer component a) is not particularly limited. However, to ensure a soft polymer matrix and to improve contact efficiency, component a) is preferably used as main monomer at a content of more than 50 parts by weight, more preferably between 55 to 98 parts by weight, such as 60 to 97 parts by weight with respect to 100 parts by weight of the total amount of monomer components. In embodiments, component a) may be present in an amount of from 60 to 92 parts by weight of the total amount of monomer components.

Monomer component b) is at least one $\alpha,\beta$-ethylenically unsaturated carboxylic acid monomer or $\alpha,\beta$-ethylenically unsaturated carboxylic acid ester monomer other than that selected for component a). While not being limited thereto, acrylic acid, methacrylic acid, beta-acryloxypropionic acid, ethacrylic acid, $\alpha$-chloroacrylic acid, $\alpha$-vinylacrylic acid, crotonic acid, $\alpha$-phenylacrylic acid, cinnamic acid, chlorocinnamic acid, $\beta$-styrylacrylic acid, maleic acid, itaconic acid, and citraconic acid, as well as their acid esters may be mentioned as examples. Preferably, component b) comprises - alternatively or in addition - at least one alkyl (meth)acrylate having an alkyl group with less than 4 carbon atoms, more preferably from 1 to 3 carbon atoms. As examples of the latter, methyl (meth)acrylate, ethyl (meth)acrylate, n-propyl (meth)acrylate, and isopropyl (meth)acrylate may be mentioned. Methyl (meth)acrylate is particularly preferred as it improves stress dissipation during debonding due to the presence of methyl group in the polymer backbone.

Although the (total) amount of monomer component b) is not particularly limited, a (total) amount of 2 to 40 parts by weight with respect to 100 parts by weight of the total amount of monomer components is typically employed. For a favourable hardness of the polymer matrix, especially preferred (total) amounts range from 2 to 20 parts by weight, such as from 3 to 15 parts by weight or from 4 to 10 parts by weight.

From the viewpoint of improved stress dissipation during debonding, it is preferred that component b) comprises: b1) an alkyl (meth)acrylate having an alkyl group with from 1 to 3 carbon atoms, and b2) at least one $\alpha,\beta$-ethylenically unsaturated carboxylic acid selected from acrylic acid and methacrylic acid, preferably both. In this case, it is preferred that the weight ratio of components b1) and b2) is from 1:1 to 10:1, more preferably from 2:1 to 5:1.

Component c) is an alkoxysilyl group-containing monomer, a functional monomer which enables crosslinking by hydrolysis and condensation in presence of atmospheric moisture. Component c) is preferably selected from an alkoxysilyl group-containing acrylate monomer or an alkoxysilyl-group containing vinyl monomer, among which alkoxysilyl group-containing acrylate monomers are especially preferred. Examples of the alkoxysilyl-group containing vinyl monomer include vinyltrialkoxysilanes, vinylalkyldialkoxysilanes, and the like. As specific examples of alkoxysilyl group-containing acrylate monomers, (meth)acyloyloxyalkyl-trialkoxysilanes (e.g. (meth)acryloyloxymethyl-trimethoxysilane, (meth)acryloyloxymethyl-triethoxysilane, 2-(meth)acryloyloxyethyl-trimethoxysilane, 2-(meth)acryloyloxyethyl-triethoxysilane, 3-(meth)acryloyloxypropyl-trimethoxysilane, 3-(meth)acryloyloxypropyl-triethoxysilane, 3-(meth)acryloyloxypropyl-tripropoxysilane, 3-(meth)acryloyloxypropyl-triisopropoxysilane), (meth) acryloyloxyalkyl-alkyldialkoxysilanes (e.g. such as (meth)acryloyloxymethyl-methyldimethoxysilane) and (meth)acryloyloxyalkyl-dialkyl(mono)alkoxysilanes or the like may be mentioned.

In preferred embodiments, the acrylic pressure-sensitive adhesive composition preferably comprises a chain transfer agent in an amount of 0.001 to 0.3 parts by weight with respect to 100 parts by weight of the total amount of monomer components, preferably between 0.01 to 0.1 parts by weight, in order to avoid an undesirable increase of the molecular weight of the acrylic polymer.

The chain transfer agent is not particularly limited and typically selected from one or more thiol compounds including monofunctional and polyfunctional thiols. Monofunctional thiols include, but are not limited to, propyl mercaptan, butyl mercaptan, hexyl mercaptan, octyl mercaptan, n-dodecyl mercaptan, thioglycollic acid, mercaptopropionic acid, alkyl thioglycollates, mercaptoethanol, mercaptoundecanoic acid, thiolactic acid, and thiobutyric acid, among which n-dodecyl mercaptan is preferred. Examples of polyfunctional thiols include trifunctional compounds such as trimethylol propane tris(3-mercaptopropionate), tetrafunctional compounds such as pentaerythritol tetra(3-mercaptopropionate), pentaerythritol tetrathioglycollate, pentaerythritol tetrathiolactate, pentaerythritol tetrathiobutyrate; hexafunctional compounds such as dipentaerythritol hexa(3-mercaptopropionate), dipentaerythritol hexathioglycollate; and octafunctional thiols such as tripentaerythritol octa (3-mercaptopropionate) or tripentaerythritol octathioglycollate.

The PSA composition may be obtained by subjecting the monomer components described above to solvent-based or emulsion-based polymerization, preferably an emulsion-based polymerisation using water as dispersion medium. Depending on the polymerization conditions, polymerization additives (such as polymerization initiators, emulsifiers, surfactants, stabilizers and/or rheology modifiers) may be suitably added to the composition.

Examples of the polymerization initiator include, but are not limited to an azo initiator (such as 2,2'-azobis[N-(2-carboxyethyl)-2-methylpropionamidine]hydrate, 2,2'-azobisisobutyronitrile, 2,2'-azobis(2-methylpropionamidine) disulfate, 2,2'-azobis(2-amidinopropane) dihydrochloride, 2,2'-azobis[2-(5-methyl-2-imidazolin-2-yl) propane] dihydrochloride, 2,2'-azobis(N, N'-dimethyleneisobutylamidine) dihydrochloride, and the like); a peroxide initiator (e.g., persulfates such as potassium persulfate and ammonium persulfate; benzoyl peroxide, t-butyl hydroperoxide, di-t-butyl peroxide, t-butyl peroxybenzoate, hydrogen peroxide, and the like); and a redox initiator in which a peroxide and a reducing agent are combined (e.g., a combination of peroxide and ascorbic acid, a combination of peroxide and an iron (II) salt, a combination of persulfate and sodium bisulfite, and the like).

The amount of a polymerization initiator can be suitably selected by the skilled artisan depending on the type of initiator and the monomer composition, and will be usually about 0.01 to 1 parts by weight with respect to 100 parts by weight of the total amount of monomer components, for example.

Other optional additives that can be contained in the PSA composition include viscosity modifiers (thickeners, etc.), leveling agents, release modifiers, plasticizers, softeners, fillers, colorants (pigments, dyes, etc.), antistatic agents, preservatives, anti-aging agents, ultraviolet absorbers, antioxidants and light stabilizers, for example.

The polymerization may be generally brought about by methods known in the art, for example by heating the above-described composition to 20 to 100 °C, typically 40 to 80 °C.

For emulsion-based systems and polymerization methods, additional considerations are typically made. For instance, surfactants may be suitably added to the composition prior to polymerization. As surfactant, known anionic, nonionic or cationic surfactants can be appropriately employed. Usually, an anionic surfactant is preferred. If present, the amount of the surfactant to be used is preferably from 0.01 to 18 parts by weight with respect to 100 parts by weight of the total amount of monomer components.

Moreover, in the case of an emulsion-based polymerization process, the monomer phase is not miscible with the aqueous phase, so the monomer phase needs to be homogenized to create monomer droplets and micelles.

After emulsion polymerization, an acid or a base may be added to adjust the pH of the polymer. Bases, such as ammonia, are preferred stabilizers since they deprotonate the carboxylic functions of component b) and stabilize the resulting particles against coalescence.

The acrylic polymer in the PSA composition according to the present invention generally exhibits a weight-average molecular weight ($M_w$) of less than 1000 kDa, which enables excellent debonding performance and mechanical resistance. Particularly favourable balance of adhesion and debonding behaviour is achieved by controlling the weight-average molecular weight ($M_w$) in the range of more than 200 kDa and 800 kDa or less, preferably from 300 to 600 kDa, further preferably from 350 to 550 kDa, or especially preferably from 370 to 490 kDa, as measured by gel permeation chromatography (GPC).

In preferred embodiments, the acrylic polymer has a number-average molecular weight ($M_n$) of less than 500 kDa, more preferably in the range of 50 to 300 kDa, further preferably from 70 to 250 kDa, or especially preferably from 100 to 200 kDa, as measured by gel permeation chromatography (GPC).

The polydispersity index (PDI) of the acrylic polymer, defined as the ratio of the weight-average molecular weight ($M_w$) to the number-average molecular weight ($M_n$), is preferably between 2.0 and 4.0.

For further enhanced adhesion to foamed substrates, the acrylic polymer used in the adhesive composition according to the present invention preferably exhibits a glass transition temperature $T_g$ of lower than -20°C, more preferably between -80°C to -30°C, further preferably between -75 to -40°C, especially preferably from -70°C to -48°C, which is measured by a differential scanning calorimetry (DSC) measurement, during which the acrylic polymer is heated at a rate of 10 °C/min to 130 °C, cooled to -90°C and heated again to 130°C.

Under aspects of improved stress dissipation and limitation of creep, the acrylic pressure-sensitive adhesive composition preferably exhibits a gel content in the range of from 15 to 45%, further preferably from 20 to 40%. The gel content is suitably determined by the procedure set out in further detail below.

In general, the acrylic polymer may used as adhesive composition directly after polymerization. However, in some instances, emulsion-based polymers may require the addition of a rheology modifier (after polymerization) to increase the viscosity of the adhesive. Examples of such rheology modifiers include, but are not limited to alkali swellable emulsions (ASE) and hydrophobically modified variants thereof. In preferred embodiments, rheology modifiers are mixed with the emulsion-based acrylic polymer at a weight ratio of 1:50 to 1:200, preferably at a weight ratio of 1:70 to 1:150.

From the viewpoint of particularly advantageous adhesion on foams and foam conformability, the PSA composition according to the present invention preferably exhibits a Young modulus of 400 Pa or less, more preferably from 50 to 350 Pa, and further preferably from 100 to 300 Pa, the Young modulus being determined according to ASTM D638. Within the above ranges, the adhesive exhibits excellent contact efficiency after light pressure is applied. On the other hand, a Young modulus higher than the above ranges makes the adhesive hard and less contact efficient.

Preferably, the yield point of the adhesive composition is between 40% to 100% and further preferably between 50% and 90%. Moreover, the maximum stress is preferably between 50 and 110 kPa and more preferably between 60 and 100 kPa. The maximum elongation is preferably at least 1500%, more preferably between 1800% and 3200%, and especially preferably between 2000% and 2800%. These parameters may be suitably determined via stress-strain tensometry at a constant tensile speed (e.g. 300 mm/min).

In another preferred embodiment in terms of excellent adhesive performance on foams, the acrylic pressure-sensitive adhesive composition has a strain hardening modulus of more than 20 Pa, more preferably from 25 to 75 Pa, an further preferably from 40 to 70 Pa. The strain hardening modulus is calculated from the slope of the stress vs. strain curve after the point of yield of the polymer.

The mechanical properties may be suitably adjusted by the skilled artisan by controlling the molecular weight distribution of the polymer and the fraction of low and high molecular weight chains, for example.

Uses of the Acrylic Pressure-Sensitive Adhesive Composition

In general, the acrylic PSA composition according to the present invention, as described in conjunction with the first embodiment above, may be used for any known PSA application and is not particularly limited. However, in view of its properties, the PSA composition is particularly advantageous for applications where high adhesion to textured surfaces of different materials, exceptionally high conformability and low environmental impact is required.

Hence, in a second embodiment, the present invention relates to the use of the acrylic pressure-sensitive adhesive composition according to the first embodiment described above for application on foamed substrate surfaces, preferably so that the PSA composition is in direct contact with the surface of the foamed substrate.

The PSA composition is advantageously non-selective towards the type of foamed materials, and exemplary foams may include, but are not limited to thermosetting resins (e.g., thermosetting epoxy foams, thermosetting aromatic copolyester-based foams, thermosetting polyurethane (PUR) foams), thermoplastic materials (e.g., foams based on polyethylene (PE), polypropylene (PP), polystyrene (PS), polyvinyl chloride (PVC), ethyl vinyl acetate (EVA) or poly(methyl methacrylate) (PMMA), or thermoplastic urethanes (TPU)) and rubber-based foams (e.g., foams based on natural rubber, silicone rubber, EPDM rubber and styrenic block copolymers, such as styrene-ethylene/butylene-styrene (SEBS), styrene-ethylene/propylene-styrene (SEPS), styrene-ethylene/ethylene/propylene-styrene (SEEPS), styrene-isobutylene-styrene (SIBS), styrene-butadiene-styrene (SBS), styrene-isoprene-styrene (SIS), and combinations thereof, for example).

In addition, the foamed substrate may be of the closed cell-type, open cell-type, or the partially open or closed cell-type.

Pressure-Sensitive Adhesive Tapes

In a third embodiment, the present invention relates to a pressure-sensitive adhesive tape comprising an adhesive layer on at least one surface of a carrier layer and an optional release liner provided on the adhesive layer, wherein the adhesive layer comprises the acrylic pressure-sensitive adhesive composition according to the first embodiment described above. Accordingly, the PSA tape may be a single-sided or double-sided adhesive tape.

The carrier layer is not particularly limited and may be a paper or preferably a film composed of materials known in the art, such as polyethylene (PE), polypropylene (PP), polyether sulphones, polyamides, polyimides, polyetherimides, polyesters, polyphenyl sulphides, polyamideimides, polyetherimides, polymethacrylates, styrene-based films, polycarbonates, polyether ketones, polyaryls, polyurethanes, polyacrylates, polybutyrals, polyethylene-vinyl acetates, polyethylene naphthylates, fluorinated polymers and combinations thereof. The carrier layer may also incorporate nonwovens or fabrics. Foam carriers may also be mentioned as exemplary carrier layers. Examples of the latter include, but are not limited are in particular foams based on homopolymers and copolymers of ethylene (e.g. PE), ethylene-vinyl acetate copolymers (EVA), polyvinyl acetates, polypropylenes, ethylene-propylene-diene rubber (EPDM), thermoplastic elastomers based on styrene block copolymers, polyurethanes based on aromatic and aliphatic diisocyanates, polyvinyl chloride (PVC), polychloroprenes, natural rubber, acrylate copolymers, and combinations thereof.

Exemplary PSA tapes may also include multilayer PSA tapes, wherein the acrylic pressure-sensitive adhesive composition according to the first embodiment is provided between two carrier layers, wherein one of the carrier layers is preferably a foam carrier layer.

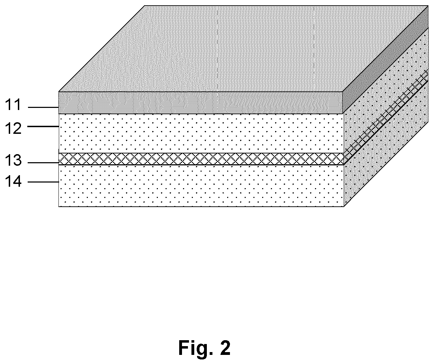

In a preferred embodiment, the PSA tape is a double-sided PSA tape with the adhesive layer comprising the PSA composition according to the first embodiment on at least one surface of the carrier layer, preferably on both surfaces of the carrier layer. An example thereof is illustrated in Fig. 2, wherein a first adhesive layer (12) is provided on one surface of a carrier layer (13) and a second adhesive layer (14) on the other surface of the carrier layer (13), with the optional release liner (11) being provided in contact with one of the adhesive layers.

Conventional release liners known in the art may be used (e.g. based on polymeric films, papers, woven materials and/or metal foils) on any outer PSA layer surface.

The thicknesses of each of the layers are not particularly limited and may be suitably adjusted by the skilled artisan depending on the choice of materials and the purpose of application.

Foam-Based Laminates

In a fourth embodiment, the present invention further relates to an adhesive foam-based laminate, comprising a foam sheet and an adhesive layer comprising the acrylic pressure-sensitive adhesive composition according to the first embodiment or a double-sided pressure-sensitive adhesive tape described in conjunction with the third embodiment on a surface of the foam sheet.

Usually, the acrylic pressure-sensitive adhesive composition will be applied on the outer side of the foam-based laminate in order to enable attachment of the laminate on another surface. However, in the context of the foam-based laminate ("foam complex"), the PSA composition according to the first embodiment or the double-sided PSA tape described in conjunction with the third embodiment may also be provided as inner (intermediate) layer which serves to attach the foam sheet to a different layer of the laminate (e.g. a second foam sheet or a carrier layer).

Further layers may be incorporated into the laminate, including, but not limited to stiffening or constraining carrier layers, damping layers, or the like.

The adhesive foam-based laminate may be used for a number of applications, including, but not limited to thermal insulation, shock absorption, vibration damping, cushioning and/or noise reduction in a wide variety of sectors, such as in the transport sector (e.g., automotive or aircraft interior or exterior, etc.), in home domestic appliances (e.g., white goods) or buildings (e.g., sound absorption panels for walls or ceilings), for example.

In order to take full advantage of the properties of the PSA composition and laminate, i.e. the ability of the foam complex to show high conformability on curved substrate surfaces, the ability of the adhesive to show non-selective adhesion on different types of foams, and the low VOC and FOG emissions, the adhesive foam-based laminate is preferably used as an element for thermal insulation, shock absorption, vibration damping, cushioning and/or noise reduction in the automotive industry.

The thicknesses of each of the layers are not particularly limited and may be suitably adjusted by the skilled artisan depending on the choice of materials and the purpose of application.

It will be understood that the preferred features of the first to fourth embodiments may be freely combined in any combination, except for combinations where at least some of the features are mutually exclusive.

**EXAMPLES**

Preparation of Pressure-Sensitive Adhesive Compositions

In a first series of experiments, three acrylic PSA compositions were formulated and processed into PSA tapes (Examples 1 and 2 and Comparative Example 1).

The polymer compositions of each adhesive is shown in Table 1. The polymer of Comparative Example 1 was identical to that of Example 1 except that monomer c) was omitted.

TABLE 1: Polymer Compositions for Exemplary PSAs

| | | Example 1 | Example 2 | Comparative Example 1 |
|---|---|---|---|---|
| Component | | [wt.-%] | [wt.-%] | [wt.-%] |
| Monomer a) | 2-ethyl hexyl acrylate | 50.249 | 33.936 | 50.249 |
| Monomer b) | methyl methacrylate | 3.547 | 2.396 | 3.547 |
| | acrylic acid | 0.721 | 0.487 | 0.721 |
| | methacrylic acid | 0.443 | 0.299 | 0.443 |
| Monomer c) | MAPTMS | 0.012 | 0.008 | - |
| Chain Transfer Agent | N-dodecylmercaptane | 0.028 | 0.019 | 0.028 |
| Surfactant | anionic-type | 7.094 | - | 7.094 |
| Initiator | azo-based radical | 0.057 | 0.038 | 0.057 |
| Solvent (Initiator) | | 0.249 (water) | 0.168 (ethyl acetate) | 0.249 (water) |
| Solvent (Feed) | | 18.312 (water) | 31.117 (ethyl acetate) | 18.312 (water) |
| Solvent (Reactor Charge) | | 18.925 (water) | 31.531 (ethyl acetate) | 18.925 (water) |
| Anti-Coalescence Agent | ammonia | 0.362 | - | 0.362 |

The solvent-based polymer of Example 2 was used without addition of any further components. On the other hand, 1 pt. per weight of a rheology modifier (Rheovis AS1125, commercially obtained from BASF) relative to 100 parts by weight of the emulsion-based polymers of Example 1 and Comparative Example 1 was added to increase the final adhesive viscosity of the PSA composition.

In the case of the emulsion-based polymerization process (Example 1 and Comparative Example 1), the phases were homogenized for 15 min at 7000 rpm with an Ultra-Turrax T50 homogenizer.

For both solvent-based and emulsion-based systems, the polymerization proceeded via semi-batch process with no reacting monomer present in the reactor initially. The reactor was purged with nitrogen ($N_2$) for 1 h before the addition of the initiator. The initiator solution was added once the temperature reached the set temperature of 60°C. The monomer feed started 10 min after the initiator solution was added to the reactor, whereupon the reactor was maintained at 60°C during the polymerization under $N_2$ atmosphere. The monomer feed was continuously purged with $N_2$ and fed into the reactor for 5h until the feed was depleted. The temperature was then raised to 65°C for 5 h to age the polymer and reduce the amount of residual monomers. In the case of the emulsion-based system, ammonia solution was added after ageing to stabilize polymer particles against coalescence.

Bulk Adhesive Analysis

Bulk properties of the adhesive were examined by gel permeation chromatography (GPC), gel content determination and differential scanning calorimetry (DSC).

The gel content was determined by an extraction experiment using ethyl acetate as a solvent. For this purpose, polymer samples were first dried in an oven for 1 h at 130 °C. Around 0.05 g of sample were weighted on a piece of Teflon, which was then closed as a bag with a Teflon string. The Teflon bag with the polymer was placed into a glass vial filled with ethyl acetate. The glass vials were stirred for 7 days at room temperature. After 7 days, the Teflon bag was removed from the vial and dried in an oven for 1 h at 130 °C. The glass vials containing the soluble fraction of the polymer were used for the molecular weight analysis via GPC. The gel content was determined by the following formula:

*Gel content (%) = (mass polymer after extraction (g) / mass polymer initial (g) ) x 100*

Gel Permeation Chromatography (GPC) was used to obtain the molecular weight distribution (MWD) of the polymers synthesized as well as the number average molecular weight ($M_n$) and weight average molecular weight ($M_w$).

GPC was performed using an 2690 Alliance HPLC system. Vials containing the soluble fraction of the polymer from the gel content determination were used as sample. Vials were dried in an oven at 40 °C until any remaining solvent was fully evaporated. Upon complete drying, they were weighted. The difference in weight of the vial before and after solvent extraction is equal to the weight of polymer present in the vial. For each 2 mg of polymer, 1 ml of tetrahydrofuran was added in the glass vial. The glass vials were placed on a shaking plate for 7 days to ensure that polymer is fully dissolved in THF. 100 μl of the sample solution was then used for the GPC analysis.

The glass transition of polymers was determined by DSC (TA discovery Q 2000). The samples were first cooled. During the measurement, the samples were heated at a rate of 10 °C/min to 130 °C, cooled to -90°C and heated again to 130°C.

Mechanical Analysis

The Young modulus, yield point, strain hardening modulus, maximum stress and maximum elongation before break were determined via stress-strain tensometry. For the stress-strain test, the adhesive formulations of Examples 1 and 2 and Comparative Example 1 were each coated on a siliconized paper liner with a final thickness of 65 μm after drying. The adhesives were dried in an oven for 1 min at 130°C. Samples were prepared by rolling the adhesive to obtain a cylinder of approximatively 3 mm of section and 40 mm in length. The edge of each cylinder was pressed between two paper pieces of 2 mm thickness. The distance between each paper sheet was 30 mm. Stress-strain tensometry was performed using a Zwick Z005 tensile machine. The samples were mounted between the clamps of the apparatus. The initial distance between both clamps was set between 20 mm and the mobile upper clamp is moved upward at a tensile speed of 300 mm/min. All tests were done in triplicate and the average of the measurements was used for the evaluation.

PSA Tape Preparation

Double-sided adhesive tapes were prepared, the construction of which is illustrated in Fig. 2. The acrylic adhesive compositions described above constituted both adhesive sides of the tape with a thickness of 55 μm each (55 g/m$^2$). A non-woven paper fabric with a thickness of 30 μm (13 g/m$^2$) was used as a carrier layer, while a siliconized paper with a thickness of 104 μm (122 g/m$^2$) was used as liner to protect the adhesive side and enable release before application. The total thickness of each double-sided adhesive tape (without liner) was 140 μm ± 5 μm.

Foam Conformability Tests

Each of the double-sided adhesive tapes was applied to three types of commercially available polymer foams, Nitto EE1000 (ethylene propylene diene monomer (EPDM)-based foam having a density of 95 kg/m$^3$ and a Young Modulus of 0.4 ± 0.5), Ramsay Rubber Superseal KD (polyurethane (PUR)-based foam having a density of 40 kg/m$^3$ and a Young Modulus of 1.1 ± 0.8) and Sekisui Alveo TA 3510 (polyethylene (PE)-based foam having a density of 29 kg/m$^3$ and a Young Modulus of 12 ± 4), to prepare foam complexes. Each of the foam materials had a thickness of 10 mm.

As substrate, onto which the foam complexes were adhered, polypropylene (with 20% talc) was used. The complex angle of application was 90° with an overlap surface of 10 mm by 20 mm. The stress level was inversely proportional to the overlap length and surface, the smaller the surface the lower the stress applied on the DST, the longer the overlap, the lower the stress applied. The conformability test was performed in an oven at 60°C for 2h. The delamination of the foam complex over the overlap was measured in mm after 2h at 60°C. No delamination between the foam complex and the PP/talc substrate (0 mm) equates a high conformability. On the other hand, complete delamination between the foam complex and the PP substrate (10 mm) is a result of poor conformability.

For the test, a double-sided adhesive tape strip of 20 mm x 50 mm was used. Each foam conformability test was performed in duplicate. One side of the double-sided adhesive tape was applied to the foam (20 mm x 50 mm) and laminated using a 2 kg-roller twice. The resulting foam complex was placed for 2 h in an oven at 60 °C. The foam complex was removed from the oven and applied to the PP/talc plate (90° complex angle, 10 mm overlap). The foam complex was pressed by rolling a 2 kg roller across the foam complex twice.

Peel Adhesion Testing

A ZwickRoell Z2.5 tensometer in tensile mode was used to measure the peel adhesion force of the double-sided adhesive tape (60 mm x 20 mm) on the three different types of foams. The double-sided adhesive tapes were first applied on the foams and laminated by rolling a 2 kg rubber roller twice to prepare foam complexes. Each foam complex was placed in an oven at 60 °C for 2 hours, and left to cool to room temperature before measurement. A PET strip with a thickness of 37 μm was applied as a backing layer on each double-sided adhesive tape. The PET backing was fixed in the upper clamp of the apparatus and the foam complex was maintained at an angle of 90° during the peel test. The upper clamp of the apparatus was then moved 40 mm upward at a speed of 10 mm/min. Each measurement was done in duplicate.

The results of the conformability and peel adhesion tests were graded from excellent (+++) to poor (-) according to Table 3 below.

TABLE 3: Classification of conformability and peel adhesion values.

| | Foam conformability 2h at 60°C (mm) | 90° peel EPDM (cN/20mm) | 90° peel PUR (cN/20mm) | 90° peel PE (cN/20mm) |
|---|---|---|---|---|
| +++ | X < 1 | X > 250 | X > 250 | X > 250 |
| ++ | $1 \leq X < 3$ | $200 < X \leq 250$ | $200 < X \leq 250$ | $200 < X \leq 250$ |
| + | $3 \leq X < 5$ | $100 < X \leq 200$ | $100 < X \leq 200$ | $100 < X \leq 200$ |
| o | $5 \leq X < 8$ | $50 < X \leq 100$ | $50 < X \leq 100$ | $50 < X \leq 100$ |
| - | $X \geq 8$ | $X \leq 50$ | $X \leq 50$ | $X \leq 50$ |

The results of the above-defined bulk, mechanical, peel adhesion and conformability analysis of Examples 1 and 2 as well as Comparative Example 1 are compiled in Table 3.

TABLE 3: Measurement results

| | Example 1 / Example 2 | Comparative Example 1 |
|---|---|---|
| $T_g$ [°C] | -53 | -55 |
| $M_n$ [kDa] | 150 | 190 |
| $M_w$ [kDa] | 450 | 500 |
| PDI | 2.9 | 2.6 |
| gel content [%] | 34 | 23 |
| Young modulus [Pa] | 350 | 470 |
| yield point [%] | 50 | 30 |
| strain hardening modulus [Pa] | 23 | 10 |
| max. stress [kPa] | 80 | 43 |
| max. elongation (before break) [%] | 2900 | no break |
| foam conformability/2h at 60°C [mm] | +++ | - |
| 90° peel strength EPDM [cN/20mm] | +++ | + |
| 90° peel strength PUR [cN/20mm] | + | ++ |
| 90° peel strength PE [cN/20mm] | ++ | ++ |

The results demonstrate that the samples according to the present invention, i.e. Examples 1 and 2, exhibit a substantially improved foam conformability when compared to Comparative Example 1, in which the alkoxysilyl group-containing monomer is absent. In addition, the non-selectivity towards different foam types and the overall peel strength is improved.

Comparison with Commercially Available Tackified PSA Tapes

In a further series of experiments, the conformability performance and peel adhesion properties of Examples 1 and 2 were compared to the following commercially available double-sided adhesive tapes, labelled as Comparative Examples 2 to 9:

Comparative Example 2: 3M™ 9088 (non-emulsion type, acrylate-based adhesive comprising a tackifier)
Comparative Example 3: Nitto 5015ELE (non-emulsion type, acrylate-based adhesive comprising a tackifier)
Comparative Example 4: Sekisui Double Faced Tape #5782 (non-emulsion type, acrylate-based adhesive comprising a tackifier)

Comparative Example 5: Avery Dennison™ FT107 (non-emulsion type, rubber-based adhesive comprising a tackifier)
Comparative Example 6: Avery Dennison™ FT7772 (emulsion type, acrylate-based adhesive comprising a tackifier)
Comparative Example 7: Nitto EW-514 (emulsion type, acrylate-based adhesive comprising a tackifier)
Comparative Example 8: DIC DAITAC AD-140E (emulsion type, acrylate-based adhesive comprising a tackifier)
Comparative Example 9: Biolink Saint Gobain™ Translink 65RX10 (UV acrylate-based adhesive comprising a tackifier)

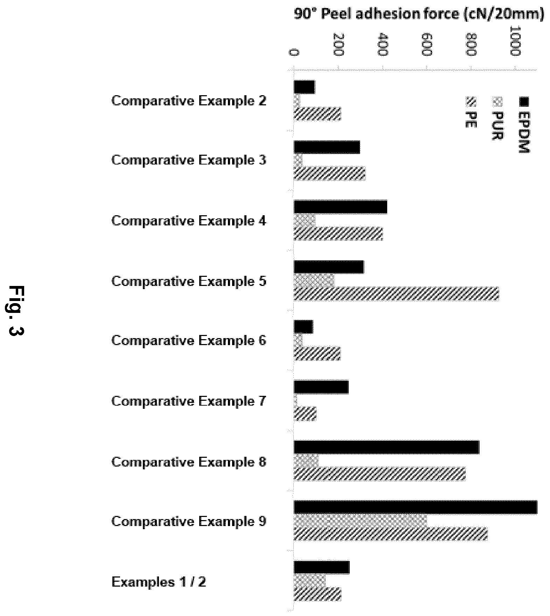

The results of the peel adhesion analysis with EPDM, PUR and PE foams performed in accordance with the above description are shown in Fig. 3 in comparison with the PSA tapes of Examples 1 and 2. The diagram demonstrates that Examples 1 and 2 outperform Comparative Examples 2, 6 and 7 with respect to all foam types despite of the lack of a tackifying agent. The solvent-based tackified adhesives of Comparative Examples 2, 3 and 4 and the tackified emulsion acrylate of Comparative Example 8 show an improved peel adhesion force with EPDM and PE foams, but a substantially lower peel adhesion with PUR foams when compared to the tapes of the present invention. The peel adhesion of Examples 1 and 2 with respect to EPDM and PUR is comparable to that of the solvent-based rubber adhesive according to Comparative Example 5. Only the UV-based tackified acrylic disclosed in Example 9 is outperforming Examples 1 and 2 in terms of foam adhesion (but at the cost of the emission performance, as will be further demonstrated below). In all cases, the tapes according to the present invention show adhesion values well above 100 cN/20mm for the three foams considered, confirming excellent bonding efficiency (contact efficient to maximize interaction with the foam) and excellent debonding efficiency (stress dissipation maximized during removal at low tensile speed). The addition of tackifier is generally known to result in an increase in peel adhesion. Accordingly, it is remarkable that Examples 1 and 2 still achieve higher adhesion than some tackified samples despite the absence of a tackifier.
The results in Fig. 3 further indicate a high selectivity of tackified double-sided tape adhesives. Because of the different values for the same double-sided adhesive tape on different foams, the non-selectivity performance, defined as the standard deviation between the 3 values obtained for each type of foam weighted by the sum of the peel adhesion values, was further evaluated:

$$Non-selectivity\ performance = \frac{Peel\ on\ EPDM + Peel\ on\ PUR + Peel\ on\ PE}{Standard\ deviation\ Peel}$$

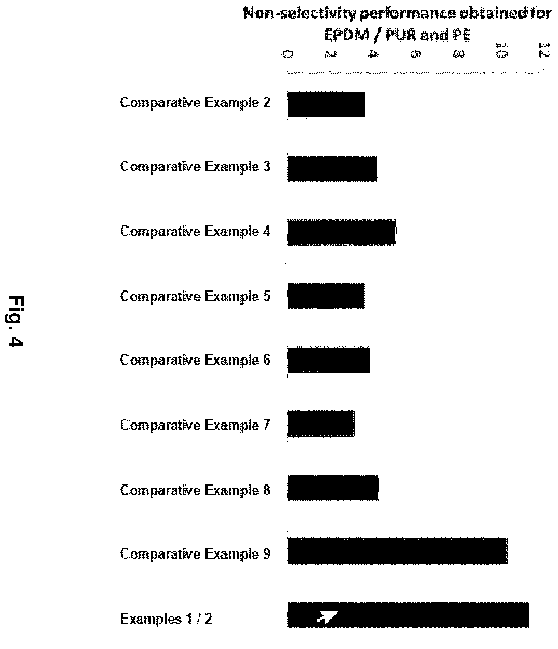

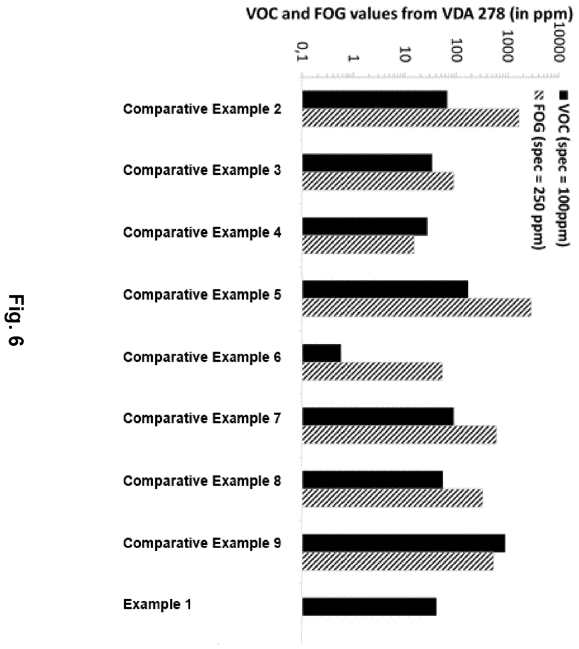

The corresponding calculation results are shown in Fig. 4. Herein, it is clearly shown that Examples 1 and 2 of the present invention exhibit an outstanding non-selectivity performance, providing excellent adhesion to a wide range of foam types, and thereby overcoming the disadvantages of the tackified adhesives of Comparative Examples 2 to 9.
In addition, the foam conformability at 60°C for 2 h of Comparative Examples 2 to 9 was tested, using EPDM foam and a PP/talc substrate, under the conditions set out in the description above. As is demonstrated in Fig. 6, Examples 1 and 2 according to the present invention provide for a substantially smaller delamination distance and hence remarkably improved foam conformability in comparison to Comparative Examples 2 to 9. Notably, no emulsion-based acrylic PSA tape could reach a delamination distance of less 10 mm, as opposed to Examples 1 and 2.
Finally, the amount of emissions generated by each double-sided adhesive tape was measured using VDA 278 specifications. Specifically, the values for VOC and FOG are obtained by integrating the peak areas within the carbon number range defined by VDA 278 from the gas chromatograms of the samples. Samples of around 40 mg were used for the test. The samples were measured 2 times for VOC, the sample with the highest VOC value was then used for the fogging measurement (FOG).
To avoid any preliminary decrease in emission values, the freshly prepared sample tape of Example 1 was conditioned in a bag immediately after coating and drying so that that evaporation was limited in order to account for the worst case. On the other hand, the commercially obtained samples of Comparative Examples 2 to 9 were conditioned in bags immediately after being received. In view of the timeframe between production and testing, it may be assumed that the determined VOC/FOG values of Comparative Examples 2 to 9 would be even higher if measured directly after production.
The results of the VOC/FOG measurements are shown in Fig. 6. The emissions levels are favourably low and well within specifications of automotive OEMs (VOC ≤ 100 ppm and FOG ≤ 250 ppm). For Example 1, VOC emissions were low (40 ppm) because of the polymerization procedure and no FOG emissions (0 ppm) were observed due to the absence of resins in the formulation. Comparative Example 9, which showed the highest peel adhesion values with EPDM, PUR and PE, exhibited the highest emissions, well above the requirements of automotive OEMs.
In view of the above, it has been demonstrated that the acrylic pressure-sensitive adhesive composition according to the present invention is unique in that it enables production of PSA tapes which reduce or even entirely avoid VOC or FOG emissions while simultaneously displaying favourably high adhesion on different types of foams and a particularly high conformability both at ambient and at elevated temperatures.

Once given the above disclosure, many other features, modifications, and improvements will become apparent to the skilled artisan.

REFERENCE NUMERALS

1: adhesive
2: foam layer
3: substrate
11: release liner
12: first adhesive layer
13: carrier layer
14: second adhesive layer

**Claims**

1. An acrylic pressure-sensitive adhesive composition, comprising an acrylic polymer comprising, as monomer components:

   a) an alkyl (meth)acrylate having an alkyl group with 2 to 14 carbon atoms;
   b) at least one $\alpha,\beta$-ethylenically unsaturated carboxylic acid monomer or $\alpha,\beta$-ethylenically unsaturated carboxylic acid ester monomer other than component a); and
   c) an alkoxysilyl group-containing monomer;
   wherein the acrylic polymer has a weight-average molecular weight ($M_w$) of less than 1000 kDa,
   wherein the acrylic pressure-sensitive adhesive composition contains a tackifier in an amount of 0.2 wt.-% or less, based on the total weight of the acrylic polymer, and
   wherein the polydispersity index (PDI) of the acrylic polymer, defined as the ratio of the weight-average molecular weight ($M_w$) to the number-average molecular weight ($M_n$) of the acrylic polymer, is between 1.5 and 4.5, the weight-average molecular weight ($M_w$) and the number-average molecular weight ($M_n$) being measured by gel permeation chromatography (GPC).

2. The acrylic pressure-sensitive adhesive composition according to claim 1, wherein the acrylic pressure-sensitive adhesive composition does not contain a tackifier.

3. The acrylic pressure-sensitive adhesive composition according to any one of claims 1 or 2,

   wherein the acrylic polymer has a weight-average molecular weight ($M_w$) measured by gel permeation chromatography in the range of more than 200 kDa and 800 kDa or less, preferably from 300 to 600 kDa, further preferably from 350 to 550 kDa, or especially preferably from 370 to 490 kDa; and/or
   wherein the acrylic polymer has a number-average molecular weight ($M_n$) measured by gel permeation chromatography of less than 500 kDa, preferably in the range of 50 to 300 kDa, further preferably from 70 to 250 kDa, or especially preferably from 100 to 200 kDa.

4. The acrylic pressure-sensitive adhesive composition according to any one of claims 1 to 3, wherein the glass transition temperature $T_g$ of the acrylic polymer is lower than -20°C, preferably between -80°C to -30°C, further preferably between -75 to -40°C, especially preferably from -70°C to -48°C, the glass transition temperature $T_g$ being determined by a differential scanning calorimetry (DSC) measurement, during which the acrylic polymer is heated at a rate of 10 °C/min to 130 °C, cooled to -90°C and heated again to 130°C.

5. The acrylic pressure-sensitive adhesive composition according to any one of claims 1 to 4, wherein the acrylic pressure-sensitive adhesive composition has a gel content in the range of from 15 to 45%, and preferably from 20 to 40%, the gel content being determined according to methods identified in the description.

6. The acrylic pressure-sensitive adhesive composition according to any one of claims 1 to 5, wherein the at least one $\alpha,\beta$-ethylenically unsaturated carboxylic acid monomer or $\alpha,\beta$-ethylenically unsaturated carboxylic acid ester monomer selected from at least methyl methacrylate, acrylic acid, methacrylic acid, and combinations thereof, and preferably comprises methyl methacrylate, acrylic acid, and methacrylic acid.

7.  The acrylic pressure-sensitive adhesive composition according to any one of claims 1 to 6, wherein the alkoxysilyl group-containing monomer is an alkoxysilyl group-containing acrylate monomer or an alkoxysilyl-group containing vinyl monomer, preferably an alkoxysilyl group-containing acrylate monomer.

8.  The acrylic pressure-sensitive adhesive composition according to any one of claims 1 to 7, wherein the amount of component a) is between 60 to 97 parts by weight, the (total) amount of component(s) b) is between 2 to 40 parts by weight, and the amount of component c) is between 0.001 to 1 parts by weight, each amount being given with respect to 100 parts by weight of the total amount of monomer components.

9.  The acrylic pressure-sensitive adhesive composition according to any one of claims 1 to 8, wherein the amount of component c) is between 0.005 to 0.05 parts by weight with respect to 100 parts by weight of the total amount of monomer components, preferably between 0.01 to 0.03 parts by weight.

10. The acrylic pressure-sensitive adhesive composition according to any one of claims 1 to 9, further comprising a chain transfer agent in an amount of 0.001 to 0.3 parts by weight with respect to 100 parts by weight of the total amount of monomer components, preferably between 0.02 to 0.1 parts by weight.

11. The acrylic pressure-sensitive adhesive composition according to any one of claims 1 to 10, wherein the acrylic polymer is a water-dispersible acrylic polymer prepared by emulsion polymerization.

12. Use of the acrylic pressure-sensitive adhesive composition according to any one of claims 1 to 11 for application on foamed substrate surfaces.

13. Pressure-sensitive adhesive tape comprising an adhesive layer on at least one surface of a carrier layer and an optional release liner provided on the adhesive layer, wherein the adhesive layer comprises the acrylic pressure-sensitive adhesive composition according to any one of claims 1 to 11.

14. Pressure-sensitive adhesive tape according to claim 13, wherein the tape is a double-sided pressure-sensitive adhesive tape with the adhesive layer being provided on at least one surface of the carrier layer.

15. Adhesive foam-based laminate, comprising a foam sheet and an adhesive layer comprising the acrylic pressure-sensitive adhesive composition according to any one of claims 1 to 11 or the double-sided pressure-sensitive adhesive tape according to claim 14 on a surface of the foam sheet.


**Patentansprüche**

1.  Acryl-Haftklebstoffzusammensetzung, umfassend ein Acrylpolymer, das als Monomerkomponenten umfasst:

    a) ein Alkyl(meth)acrylat mit einer Alkylgruppe mit 2 bis 14 Kohlenstoffatomen;
    b) mindestens ein $\alpha,\beta$-ethylenisch ungesättigtes Carbonsäuremonomer oder $\alpha,\beta$-ethylenisch ungesättigtes Carbonsäureestermonomer, das von Komponente a) verschieden ist; und
    c) ein Alkoxysilylgruppen enthaltendes Monomer;
    wobei das Acrylpolymer ein gewichtsmittleres Molekulargewicht ($M_w$) von weniger als 1000 kDa aufweist,
    wobei die Acryl-Haftklebstoffzusammensetzung einen Klebrigmacher in einer Menge bezogen auf das Gesamtgewicht des Acrylpolymers von 0,2 Gew.-% oder weniger enthält, und
    wobei der Polydispersitätsindex (PDI) des Acrylpolymers, definiert als das Verhältnis des gewichtsmittleren Molekulargewichts (Mw) zum zahlenmittleren Molekulargewicht ($M_n$) des Acrylpolymers, zwischen 1,5 und 4,5 liegt, wobei das gewichtsmittlere Molekulargewicht ($M_w$) und das zahlenmittlere Molekulargewicht ($M_n$) durch Gelpermeationschromatographie (GPC) gemessen werden.

2.  Acryl-Haftklebstoffzusammensetzung nach Anspruch 1, wobei die Acryl-Haftklebstoffzusammensetzung keinen Klebrigmacher enthält.

3.  Acryl-Haftklebstoffzusammensetzung nach einem der Ansprüche 1 oder 2,

wobei das Acrylpolymer ein durch Gelpermeationschromatographie gemessenes gewichtsmittleres Molekulargewicht ($M_w$) im Bereich von mehr als 200 kDa und 800 kDa oder weniger, vorzugsweise von 300 bis 600 kDa, weiter vorzugsweise von 350 bis 550 kDa oder besonders bevorzugt von 370 bis 490 kDa, aufweist; und/oder wobei das Acrylpolymer ein durch Gelpermeationschromatographie gemessenes zahlenmittleres Molekulargewicht ($M_n$) von weniger als 500 kDa, vorzugsweise im Bereich von 50 bis 300 kDa, weiter vorzugsweise von 70 bis 250 kDa oder besonders bevorzugt von 100 bis 200 kDa aufweist.

4. Acryl-Haftklebstoffzusammensetzung gemäß einem der Ansprüche 1 bis 3, wobei die Glasübergangstemperatur $T_g$ des Acrylpolymers niedriger als -20 °C ist, vorzugsweise zwischen -80 °C und -30 °C, ferner bevorzugt zwischen -75 °C und -40 °C, besonders bevorzugt zwischen -70 °C bis -48 °C, wobei die Glasübergangstemperatur $T_g$ mittels einer Differentialthermoanalyse bestimmt wird, bei der das Acrylpolymer mit einer Rate von 10 °C/min auf 130 °C erhitzt, auf -90 °C abgekühlt und erneut auf 130 °C erhitzt wird.

5. Acryl-Haftklebstoffzusammensetzung gemäß einem der Ansprüche 1 bis 4, wobei die Acryl-Haftklebstoffzusammensetzung einen Gelgehalt im Bereich von 15 bis 45 % und vorzugsweise von 20 bis 40 % aufweist, wobei der Gelgehalt gemäß den in der Beschreibung angegebenen Verfahren bestimmt wird.

6. Acryl-Haftklebstoffzusammensetzung gemäß einem der Ansprüche 1 bis 5, wobei das mindestens eine α,β-ethylenisch ungesättigte Carbonsäuremonomer oder α,β-ethylenisch ungesättigte Carbonsäureestermonomer aus Methylmethacrylat, Acrylsäure, Methacrylsäure und Kombinationen davon ausgewählt ist und vorzugsweise Methylmethacrylat, Acrylsäure und Methacrylsäure umfasst.

7. Acryl-Haftkleberzusammensetzung gemäß einem der Ansprüche 1 bis 6, wobei das Alkoxysilylgruppen enthaltende Monomer ein Alkoxysilylgruppen enthaltendes Acrylatmonomer oder ein Alkoxysilylgruppen enthaltendes Vinylmonomer, vorzugsweise ein Alkoxysilylgruppen enthaltendes Acrylatmonomer, ist.

8. Acryl-Haftkleberzusammensetzung gemäß einem der Ansprüche 1 bis 7, wobei die Menge der Komponente a) zwischen 60 und 97 Gewichtsteilen liegt, die (Gesamt-)Menge der Komponente(n) b) zwischen 2 bis 40 Gewichtsteilen liegt und die Menge der Komponente c) zwischen 0,001 und 1 Gewichtsteil liegt, wobei jede Menge in Bezug auf 100 Gewichtsteile der Gesamtmenge der Monomerkomponenten angegeben ist.

9. Acryl-Haftklebstoffzusammensetzung gemäß einem der Ansprüche 1 bis 8, wobei die Menge der Komponente c) zwischen 0,005 und 0,05 Gewichtsteilen bezogen auf 100 Gewichtsteile der Gesamtmenge an Monomerkomponenten beträgt, vorzugsweise zwischen 0,01 und 0,03 Gewichtsteilen.

10. Acryl-Haftklebstoffzusammensetzung gemäß einem der Ansprüche 1 bis 9, die ferner ein Kettenübertragungsmittel in einer Menge von 0,001 bis 0,3 Gewichtsteilen bezogen auf 100 Gewichtsteile der Gesamtmenge an Monomerkomponenten umfasst, vorzugsweise zwischen 0,02 und 0,1 Gewichtsteilen.

11. Acryl-Haftklebstoffzusammensetzung gemäß einem der Ansprüche 1 bis 10, wobei das Acrylpolymer ein wasserdispergierbares Acrylpolymer ist, welches mittels Emulsionspolymerisation hergestellt wird.

12. Verwendung der Acryl-Haftklebstoffzusammensetzung gemäß einem der Ansprüche 1 bis 11 zur Anwendung auf geschäumte Substratoberflächen.

13. Haftklebeband, umfassend eine Klebstoffschicht auf mindestens einer Oberfläche einer Trägerschicht und eine optionale Trennschicht, die auf der Klebstoffschicht bereitgestellt ist, wobei die Klebstoffschicht die Acryl-Haftklebstoffzusammensetzung gemäß einem der Ansprüche 1 bis 11 umfasst.

14. Haftklebeband nach Anspruch 13, wobei das Band ein doppelseitiges Haftklebeband ist, bei dem die Klebstoffschicht auf mindestens einer Oberfläche der Trägerschicht vorgesehen ist.

15. Klebstofflaminat auf Schaumbasis, umfassend eine Schaumstoffbahn und eine Klebstoffschicht, die die Acryl-Haftklebstoffzusammensetzung gemäß einem der Ansprüche 1 bis 11 oder das doppelseitige Haftklebeband gemäß Anspruch 14 auf einer Oberfläche der Schaumstoffbahn umfasst.

## Revendications

1. Composition adhésive acrylique sensible à la pression, comprenant un polymère acrylique comprenant, en tant que composants monomères :

   a) un (méth)acrylate d'alkyle ayant un groupe alkyle de 2 à 14 atomes de carbone ;
   b) au moins un monomère d'acide carboxylique $\alpha,\beta$-éthyléniquement insaturé ou un monomère d'ester d'acide carboxylique $\alpha,\beta$-éthyléniquement insaturé autre que le composant a) ; et
   c) un monomère contenant un groupe alcoxysilyle ; dans laquelle le polymère acrylique a un poids moléculaire moyen en poids ($M_w$) inférieur à 1 000 kDa,
   dans laquelle la composition adhésive acrylique sensible à la pression contient un agent adhésif en quantité égale ou inférieure à 0,2 % en poids, sur la base du poids total du polymère acrylique, et
   dans laquelle l'indice de polydispersité (PDI) du polymère acrylique, défini comme le rapport entre le poids moléculaire moyen en poids ($M_w$) et le poids moléculaire moyen en nombre ($M_n$) du polymère acrylique, est compris entre 1,5 et 4,5, le poids moléculaire moyen en poids ($M_w$) et le poids moléculaire moyen en nombre ($M_n$) étant mesurés par chromatographie par perméation de gel (GPC).

2. Composition adhésive acrylique sensible à la pression selon la revendication 1, dans laquelle la composition adhésive acrylique sensible à la pression ne contient pas de tackifiant.

3. Composition adhésive acrylique sensible à la pression selon l'une quelconque des revendications 1 ou 2,

   dans laquelle le polymère acrylique a une poids moléculaire moyen en poids ($M_w$) mesuré par chromatographie par perméation de gel compris entre plus de 200 kDa et 800 kDa ou moins, de préférence de 300 à 600 kDa, de préférence encore de 350 à 550 kDa, ou de préférence encore de 370 à 490 kDa ; et/ou
   dans laquelle le polymère acrylique a un poids moléculaire moyen en nombre ($M_n$) mesuré par chromatographie par perméation de gel inférieur à 500 kDa, de préférence compris entre 50 et 300 kDa, de préférence encore entre 70 et 250 kDa, ou de préférence encore entre 100 et 200 kDa.

4. Composition adhésive acrylique sensible à la pression selon l'une quelconque des revendications 1 à 3, dans laquelle la température de transition vitreuse $T_g$ du polymère acrylique est inférieure à - 20°C, de préférence comprise entre -80°C et -30°C, de préférence encore comprise entre -75 et -40°C, de préférence encore comprise entre -70°C et -48°C, la température de transition vitreuse $T_g$ étant déterminée par une mesure de calorimétrie différentielle à balayage (DSC), au cours de laquelle le polymère acrylique est chauffé à une vitesse de 10°C/min jusqu'à 130°C, refroidi à -90°C et chauffé à nouveau jusqu'à 130°C.

5. Composition adhésive acrylique sensible à la pression selon l'une quelconque des revendications 1 à 4, dans laquelle la composition adhésive acrylique sensible à la pression a une teneur en gel allant de 15 à 45 %, et de préférence de 20 à 40 %, la teneur en gel étant déterminée selon des procédés identifiés dans la description.

6. Composition adhésive acrylique sensible à la pression selon l'une quelconque des revendications 1 à 5, dans laquelle l'au moins un monomère d'acide carboxylique $\alpha,\beta$-éthyléniquement insaturé ou monomère d'ester d'acide carboxylique $\alpha,\beta$-éthyléniquement insaturé sélectionné parmi au moins le méthacrylate de méthyle, l'acide acrylique, l'acide méthacrylique, et leurs combinaisons, et de préférence comprend le méthacrylate de méthyle, l'acide acrylique, et l'acide méthacrylique.

7. Composition adhésive acrylique sensible à la pression selon l'une quelconque des revendications 1 à 6, dans laquelle le monomère contenant un groupe alcoxysilyle est un monomère acrylate contenant un groupe alcoxysilyle ou un monomère vinyle contenant un groupe alcoxysilyle, de préférence un monomère acrylate contenant un groupe alcoxysilyle.

8. Composition adhésive acrylique sensible à la pression selon l'une quelconque des revendications 1 à 7, dans laquelle la quantité de composant a) est comprise entre 60 et 97 parties en poids, la quantité (totale) de composant(s) b) est comprise entre 2 et 40 parties en poids, et la quantité de composant c) est comprise entre 0,001 et 1 partie en poids, chaque quantité étant donnée par rapport à 100 parties en poids de composants monomères.

9. Composition adhésive acrylique sensible à la pression selon l'une quelconque des revendications 1 à 8, dans laquelle la quantité de composant c) est comprise entre 0,005 à 0,05 partie en poids par rapport à 100 parties en poids de la quantité totale de composants monomères, de préférence entre 0,01 à 0,03 partie en poids.

10. Composition adhésive acrylique sensible à la pression selon l'une quelconque des revendications 1 à 9, comprenant en outre un agent de transfert de chaîne en une quantité de 0,001 à 0,3 partie en poids par rapport à 100 parties en poids de la quantité totale de composants monomères, de préférence entre 0,02 à 0,1 partie en poids.

11. Composition adhésive acrylique sensible à la pression selon l'une quelconque des revendications 1 à 10, dans laquelle le polymère acrylique est un polymère acrylique dispersible dans l'eau préparé par polymérisation en émulsion.

12. Utilisation de la composition adhésive acrylique sensible à la pression selon l'une quelconque des revendications 1 à 11 pour une application sur des surfaces de substrats moussés.

13. Ruban adhésif sensible à la pression comprenant une couche adhésive sur au moins une surface d'une couche de support et un revêtement antiadhésif optionnel prévu sur la couche adhésive, dans lequel la couche adhésive comprend la composition adhésive acrylique sensible à la pression selon l'une quelconque des revendications 1 à 11.

14. Ruban adhésif sensible à la pression selon la revendication 13, dans lequel le ruban est un ruban adhésif sensible à la pression double face, la couche adhésive étant prévue sur au moins une surface de la couche support.

15. Stratifié adhésif à base de mousse, comprenant une feuille de mousse et une couche adhésive comprenant la composition adhésive acrylique sensible à la pression selon l'une quelconque des revendications 1 à 11 ou le ruban adhésif double face sensible à la pression selon la revendication 14 sur une surface de la feuille de mousse.

Fig. 1A

Fig. 1B

Fig. 1C

11

12

13

14

**Fig. 2**

**Fig. 3**

**Fig. 4**

**Fig. 5**

**Fig. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011093956 A
- JP 6590046 B
- JP 2015101644 A
- US 2013323498 A1
- JP 2017071784 A
- EP 3147339 A1